# EUROPÄISCHE PATENTSCHRIFT

(11) **EP 0 520 994 B1**
(45) Veröffentlichungstag und Bekanntmachung des Hinweises auf die Patenterteilung: **25.01.1995**
(21) Anmeldenummer: 91902659.1
(22) Anmeldetag: 23.01.1991
(51) Int. Cl.: H02K 17/22, H01R 39/42

(54) **KURZSCHLUSS- UND BÜRSTENABHEBEVORRICHTUNG FÜR ASYNCHRONMOTOREN MIT SCHLEIFRINGLAÜFER**
SHORT-CIRCUITING AND BRUSH-RAISING DEVICE FOR ASYNCHRONOUS MOTORS WITH A SLIP-RING ROTOR
DISPOSITIF DE COURT-CIRCUITAGE ET DE RELEVAGE DES BALAIS POUR MOTEURS ASYNCHRONES A BAGUES COLLECTRICES

(30) Priorität: 23.03.1990 DE 4009851
(43) Veröffentlichungstag der Anmeldung: 07.01.1993
(73) Patentinhaber: SIEMENS AKTIENGESELLSCHAFT, 80333 München (DE)
(72) Erfinder: LANG, Karl, D-1000 Berlin 26 (DE)
(86) Internationale Anmeldenummer: DE9100074
(87) Internationale Veröffentlichungsnummer: WO9115050

(56) Entgegenhaltungen:
- DE-B- 1 005 173

## Beschreibung

Die Erfindung bezieht sich auf eine Kurzschluß- und Bürstenabhebevorrichtung für Asynchronmotoren mit Schleifringläufer, bei denen die Schleifringe axial ungefederte Kurzschlußkontakte aufweisen, über die sie mittels eines in axialer Richtung verschiebbaren Kurzschlußringes kurzschließbar sind, wobei diese Vorrichtung Mittel zur Auslösung der axialen Verschiebung des Kurzschlußringes und einen die Läuferwelle umgebenden, drehbar gelagerten Betätigungsring enthält, der zwischen einer Anfahrstellung und einer Betriebsstellung verdrehbar ist und an dem gleichlange Lenker (Bürstenbetätigungslenker) mit einem Gelenkpunkt befestigt sind, die über Hebel eine Drehung der Bürstenbolzen und ein Abheben der Bürsten erst bewirkten, wenn die Schleifringe kurzgeschlossen sind.

Eine derartige Kurzschluß- und Bürstenabhebevorrichtung ist aus der Literaturstelle Moeller Werr "Leitfaden der Elektrotechnik", Band III "Konstruktion und Festigkeitsberechnungen elektrischer Maschinen", 3. Aufl., Seite 122, insbesondere Abbildung 122.1 bekannt. Diese Vorrichtungen werden verwendet, damit nach dem Hochlauf des Schleifringläufers über Widerstände der Asynchronmotor mit der kurzgeschlossenen Läuferwicklung und abgehobenen Bürsten im Betrieb mit geringen Verlusten und ohne Bürstenabnutzung laufen kann.

Bei der bekannten Vorrichtung ist der Betätigungsring in Rollen gelagert und drehbar am Lagerschild befestigt. Er dient zur Verbindung von mehreren Bürstenbolzen über Lenker bzw. Laschen gleicher Länge, die mit einem Gelenkpunkt gleichmäßig am Umfang des Betätigungsringes verteilt befestigt sind. Wird der Betätigungsring mittels einer Verzahnung, in die ein Zahnrad eingreift, in der dem Kurzschließen zugeordneten Richtung gedreht, so bewirken die Lenker über Hebel eine Drehung der Bürstenbolzen und heben die Bürsten ab. Mit dem die Drehung des Betätigungsringes auslösenden Zahnrad ist außerdem ein zusätzlich vorgesehener Exzenter verbunden, der eine Verschiebung des Kurzschlußringes in axialer Richtung bewirkt, wobei dieser die Kurzschlußkontakte der Schleifringe aber bereits vor dem Abheben der Bürsten berührt und somit kurzschließt. Da die Krafteinleitung in den Kurzschlußring nur an einen einzigen Punkt erfolgt, besteht die Gefahr eines Verkantens des Kurzschlußringes, dessen Länge im Verhältnis zum Innendurchmesser klein ist. Soll dies durch eine Lagerung auf der Läuferwelle mit kleinem Spiel verhindert werden, so ist diese ebenso wie der Zahneingriff und der Exzenter empfindlich gegen Verschmutzung. Außerdem ist die bekannte Kurzschluß- und Bürstenabhebevorrichtung aufwendig, da für das Kurzschließen der Schleifringe und für das Abheben der Bürsten unterschiedliche Mittel vorhanden sind.

In der DE-B-10 05 173 ist eine elektrische Maschine mit einer Kurzschluß- und Bürstenabhebevorrichtung beschrieben, die einen im Bürstenträgergehäuse gelagerten Steuerring zum Kurzschließen der Schleifringe sowie zum Abheben und Aufsetzen der Bürsten aufweist. Das Kurzschließen der Schleifringe geschieht über Kippschalter, die durch einen axial verschiebbaren Schaltring betätigt werden. Der Schaltring wird mit Hilfe einer Kulissenführung über einen drehbaren Steuerring bewegt. Mit dem Steuerring sind auch Hebel zur Betätigung der Bürstenabhebevorrichtung verbunden.

Die Umsetzung einer Drehbewegung in die Axialbewegung des Schaltringes ist aufwendig und anfällig. Außerdem ist die Gefahr des Verkantens des Schaltringes gegeben.

Der Erfindung liegt die Aufgabe zugrunde, eine Kurzschluß- und Bürstenabhebevorrichtung zu schaffen, die möglichst verschleißfrei arbeitet und unempfindlich gegen Verschmutzungen ist.

Zur Lösung dieser Aufgabe ist eine Kurzschluß- und Bürstenabhebevorrichtung der eingangs beschriebenen Art gemäß der Erfindung so ausgebildet, daß der Betätigungsring über drei gleichmäßig über den Umfang verteilten, einseitig ortsfest gelagerten, gleichlangen und axial ausgerichteten Lenkern (Axiallenker) parallel geführt ist und auf seiner Innenfläche auf drei gleichmäßig über den Umfang verteilten radialen Achsen jeweils eine Rolle trägt, deren Mantelfläche in der Anfahrstellung an der den Schleifringen zugewandten Stirnfläche des Kurzschlußringes anliegt, der in Richtung auf die Rollen bzw. auf die Kurzschlußkontakte federbelastet ist, daß die Bürstenbetätigungslenker senkrecht zu den Axiallenkern ausgerichtet sind, daß die jeweiligen Befestigungspunkte der Lenker (Axiallenker und Bürstenbetätigungslenker) so gewählt sind, daß infolge der bei der Kurzschließ-Drehbewegung des Betätigungsringes auftretenden Auslenkung die nicht ortsfesten Befestigungspunkte zeitlich versetzt Scheitelpunkte durchlaufen, wobei zunächst die Befestigungspunkte der Bürstenbetätigungslenker ihren Scheitelpunkt und danach die Befestigungspunkte der Axiallenker ihren Scheitelpunkt durchlaufen, und daß der Abstand zwischen den Kurzschlußkontakten und der Stirnfläche des Kurzschlußringes in der Anfahrstellung kleiner ist als die axiale Bewegung des Betätigungsringes zwischen der Anfahr- und der Betriebsstellung.

Bei der gemäß der Erfindung ausgebildeten Kurzschluß- und Bürstenabhebevorrichtung wird sowohl die Bewegung des Kurzschlußringes für das Kurzschließen der Schleifringe als auch das Abheben der Bürsten von dem Betätigungsring ausgelöst, da dieser infolge der besonderen Gestaltung seiner Lagerung während der Drehbewegung zwischen der Anfahrstellung und der Betriebsstellung auch eine Verlagerung in axialer Richtung durchführt, bei welcher er durch die Axiallenker ganz genau parallel geführt ist. Durch die abgestimmte Anordnung der jeweils Gelenkpunkte bildenden Befestigungspunkte der mit dem Betätigungsring verbundenen Lenker (Axiallenker und Bürstenbetätigungslenker), die außerdem zueinander senkrecht stehen, derart, daß bei der Drehung des Betätigungsringes die Scheitelpunkte der jeweiligen axialen Verlagerung der frei beweglichen Befestigungspunkte der Lenker zeitlich versetzt durchlaufen werden, wird die geforderte Bedingung, daß die Bürsten erst abgehoben werden dürfen, wenn die Schleifringe kurzgeschlossen sind, erfüllt.

Der Kurzschlußring ist in Richtung auf die am Betätigungsring befestigten Rollen und auf die Kurzschlußkontakte der Schleifringe federbelastet. Er wird also bei Stillstand des Asynchronmotors, wenn sich der Betätigungsring in der Anfahrstellung befindet, von Federn gegen die Mantelfläche der drei gleichmäßig am Umfang des Betätigungsringes angeordneten Rollen gedrückt. Da somit eine gleichmäßige Dreipunktanlage der an der Stirnfläche des Kurzschlußringes gegeben ist, wird auch ein Verkanten des Kurzschlußringes bei der axialen Bewegung verhindert.

Jeder der mit dem Betätigungsring verbundenen Lenker hat jeweils einen ortsfest liegenden und einen frei beweglichen Befestigungspunkt. Bei den Axiallenkern ist der Befestigungspunkt (Gelenkpunkt) am Betätigungsring frei beweglich, da dessen Lagerung sowohl eine Drehung als auch eine axiale Verschiebung erlaubt. Bei den Bürstenbetätigunglenkern ist der Gelenkpunkt am Betätigungsring als ortsfest anzusehen, denn er muß der Bewegung des Betätigungsringes folgen, dagegen ist der andere Gelenkpunkt, der zu einen mit den Bürstenbolzen verbundenen Hebel führt, frei beweglich. Die Axiallenker und die Bürstenbetätigungslenker stehen zueinander senkrecht und die Anordnung der jeweiligen ortsfesten Befestigungspunkte der Lenker ist zu der der jeweiligen beweglichen Gelenkpunkte so abgestimmt, daß man bei einer Drehung des Betätigungsringes ein zeitlich versetztes, d. h. aufeinanderfolgendes Durchlaufen der Scheitelpunkte der jeweiligen Bewegungen der beweglichen Befestigungspunkte der Lenker erreicht. Dadurch ist die bei der Drehung des Betätigungsringes aus der Anfahrstellung heraus in Richtung des Kurzschließens zunächst auftretende Verlagerung der freien Befestigungspunkte der Bürstenbetätigungslenker sehr gering, da sie ihren Scheitelpunkt durchlaufen. Entsprechend werden die Hebel und Bürstenbolzen kaum gedreht. Die Axiallenker bewirken dagegen dabei eine verhältnismäßig große axiale Auslenkung des Betätigungsringes, da ihr beweglicher Befestigungspunkt am Betätigungsring den Scheitelpunkt noch nicht erreicht hat und somit die axiale Bewegung groß ist. Entsprechend groß ist die Verlagerung des Kurzschlußringes in Richtung auf die Schleifringe.

Da weiterhin der Abstand zwischen den Kurzschlußkontakten und der Stirnfläche des Kurzschlußringes in der Anfahrstellung kleiner ist als die axiale Bewegung des Betätigungsringes in Kurzschließrichtung zwischen der Anfahr- und der Betriebsstellung, erreicht also der dem Betätigungsring in seiner axialen Verlagerung folgende Kurzschlußring die Kurzschlußkontakte der Schleifringe, gelangt an ihnen zur Anlage und schließt sie mit einem der Federkraft entsprechenden Kontaktdruck kurz, bevor die Bewegung der Bürstenbetätigungslenker in Umfangsrichtung hinter dem Scheitelpunkt so groß wird, daß die Drehung des Bürstenbolzens das Abheben der Bürsten auslöst. Während dieses Abhebens der Bürsten von den Schleifringen entfernen sich aber die Mantelflächen der Rollen der weiteren, jetzt nur noch geringen axialen Bewegung des Betätigungsringes folgend von der Stirnfläche des Kurzschlußringes. Während des normalen Betriebes des Asynchronläufers mit kurzgeschlossener Läuferwicklung liegen daher weder die Bürsten auf den Schleifringen noch die Rollen am Kurzschlußring an. Dadurch wird ein verlust- und verschleißarmer Betrieb der Maschine ermöglicht.

Die Ausbildung der Kurzschluß- und Bürstenabhebevorrichtung hat, abgesehen von der reibungsarmen Lagerung des Betätigungsringes, noch den Vorteil, daß die Rollen des Betätigungsringes vom Stillstand des Asynchronmotors bis zum Kurzschließen der Schleifringe an dem Kurzschlußring anliegen. Bei dem Hochlaufen des Asynchronmotors über Widerstände werden also zusammen mit dem Kurzschlußring, der mit der Läuferwelle rotiert, auch die Rollen des Betätigungsringes beschleunigt. Diese Beschleunigung ist stoßfrei und hat keine Rückwirkung auf den Betätigungsring. Da somit keine Relativbewegung zwischen den Mantelflächen der Rollen und der Stirnfläche des Kurzschlußringes auftritt, bleibt auch die Abnutzung der Rollen gering.

Da durch die Dreipunkt-Krafteinleitung zwischen Betätigungsring und Kurzschlußring ein Verkanten des Kurzschlßringes vermieden wird, kann dessen Lagerung problemlos auf kleinen Führungsflächen mit relativ großen Spiel ausgebildet werden. Dadurch ist die Kurzschluß- und Bürstenabhebevorrichtung auch unempfindlich gegen Verschmutzung.

Es empfiehlt sich, den Betätigungsring in drei gleichmäßig über den Umfang verteilten, einseitig ortsfest gelagerten, radial ausgerichteten Lenkern (Radiallenker) zu lagern. Dann kann der Betätigungsring auch die bei der Drehung auftretenden axialen Verlagerung reibungs- und verschleißarm ausführen. Dazu können in zweckmäßiger Weise zwei der Radiallenker die gleiche starre Länge aufweisen, während der dritte Radiallenker längenvariabel ausgebildet ist. Auf diese Weise kann die drehbare Lagerung des Betätigungsringes reibungsarm der verhältnismäßig komplizierten Bewegung des Betätigungsringes während der Drehung von der Anfahrstellung zur Betriebsstellung widerstandlos folgen. Es handelt sich dabei um eine angenähert schraubenlinienförmige Bewegung.

Besonders reibungs- und verschleißarm werden die Befestigungspunkte der Lenker in der Kurzschluß- und Bürstenabhebevorrichtung wenn sie als Gelenkpunkte mit Kugelgelenkköpfen ausgebildet sind. Der Kurzschlußring kann mit Vorteil auf Gleitbolzen gelagert sein, wodurch die Lagerung unempfindlich gegen Verschmutzung wird.

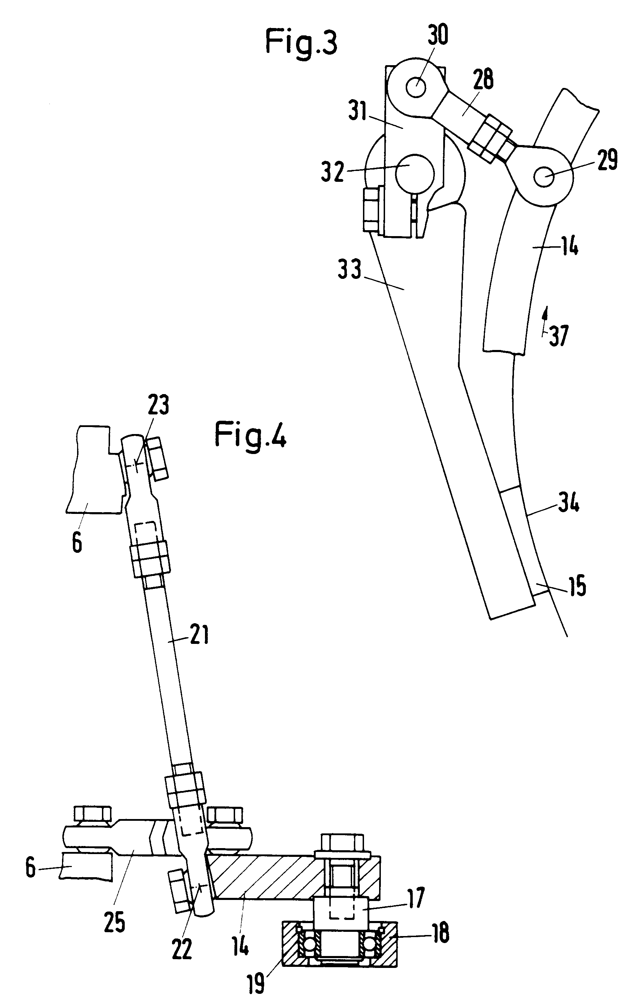

In folgenden sei die Erfindung noch anhand des in den Figuren 1 bis 6 der Zeichnung schematisch dargestellten Ausführungsbeispiels näher erläutert, auf welches sich die Erfindung aber nicht beschränkt.
Figur 1 zeigt eine Ansicht der Kurzschluß-Bürstenabhebevorrichtung in Richtung auf das Lagerschild gesehen (ohne Kurzschlußring) in der Anfahrstellung.
In Figur 2 ist (mit anderem Maßstab) ein Längsschnitt durch die Schleifringanordnung und die Kurzschluß- und Bürstenverstelleinrichtung eines Asynchronmotors dargestellt.
Figur 3 zeigt ein vergrößertes Detail aus Figur 1.
Die Figur 4 zeigt den Schnitt IV-IV in Figur 1.
Die Figuren 5 und 6 sind Prinzipdarstellungen zur Erklärung des Bewegungsablaufs der Bürstenbetätigungslenker (Fig. 5) bzw. der Axiallenker (Fig. 6) bei der Kurzschließung.

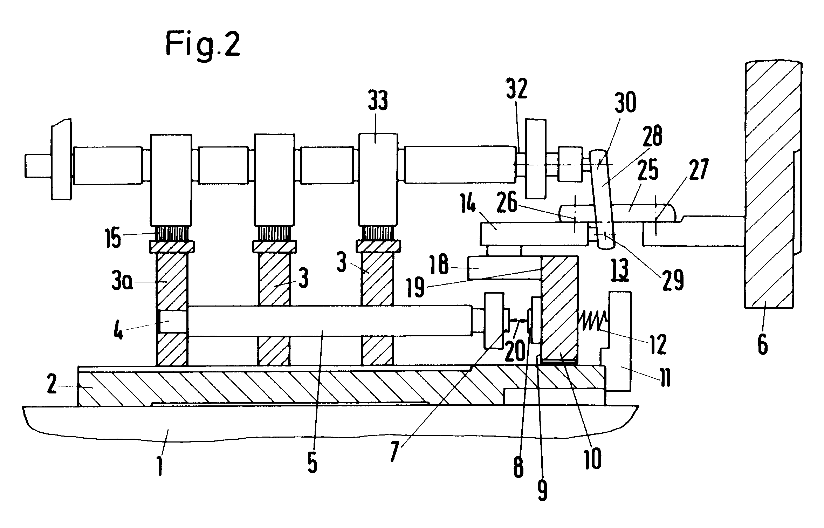

Auf der Läuferwelle 1 eines Asynchronmotors befindet sich ein Nabenkörper 2 mit drei Schleifringen 3, die in nicht dargestellter Weise mit der Läuferwicklung verbunden sind. Mit den Schleifringen 3 sind an mehreren Stellen axial verlaufende Bolzen 4 verbunden, die jeweils zwei der Schleifringe 3 mittels eines Isolierrohres 5 isoliert durchsetzen und mit dem dritten Schleifring (3a in Fig. 2) elektrischen Kontakt haben. Auf der dem Lagerschild 6 zugewandten Stirnseite tragen die Bolzen 4 einen Kurzschlußkontakt 7.

Jedem Kurzschlußkontakt 7 steht ein Kurzschlußkontakt 8 gegenüber, der sich auf der Stirnfläche 9 eines Kurzschlußringes 10 befindet. Der Kurzschlußring 10 ist auf nicht dargestellten Gleitbolzen gelagert und über Tragkörper 11 mit dem Nabenkörper 2 bzw. der Läuferwelle 1 verbunden. Er rotiert also mit dieser und den Schleifringen 3. Außerdem ist der Kurzschlußring 10 durch Federn 12, die in Figur 2 nur symbolisch angedeutet sind, in Richtung auf die Kurzschlußkontakte 7 an den Bolzen 4 vorgespannt.

Der Kurzschlußring 10 ist in axialer Richtung verschiebbar. Zur gesteuerten Verschiebung des Kurzschlußringes 10 dient die Kurzschluß- und Bürstenabhebevorrichtung 13 mit einem die Läuferwelle 1 umgebenden Betätigungsring 14, der zwischen einer Anfahrstellung und einer Betriebsstellung verdrehbar ist und der das Abheben der Bürsten 15 von den Schleifringen 3 erst bewirkt, wenn diese durch den Kurzschlußring 10 kurzgeschlossen sind.

Der Betätigungsring 14 trägt an der Innenfläche 16 drei gleichmäßig über den Umfang verteilte, jeweils auf radial ausgerichteten Achsen 17 angeordnete Rollen 18, deren Mantelfläche 19 in der Anfahrstellung an der den Schleifringen 3 zugewandten Stirnfläche 9 der Kurzschlußringes 10 anliegt. Die Rollen 18 halten mithin den Kurzschlußring 10 gegen die Kraft der Federn 12 fest. Zwischen den Kurzschlußkontakten 7 der Schleifringe 3 und den Kurzschlußkontakten 8 des Kurzschlußringes 10 verbleibt in der Anfahrstellung ein in Fig. 2 durch Pfeile angedeuteter Abstand 20. Dieser Abstand 20 ist kleiner als die vom Betätigungsring 14 während der Verdrehung in Kurzschließrichtung zwischen der Anfahr- und der Betriebsstellung durchgeführte axiale Bewegung in Richtung auf die Schleifringe 3.

Der Betätigungsring 14 ist in drei gleichmäßig über den Umfang verteilten, einseitig ortsfest gelagerten, radial ausgerichteten Lenkern 21 (Radiallenker) aufgehängt. Dazu sind die Radiallenker 21 jeweils mit dem Gelenkpunkt 22 am Betätigungsring 14 befestigt und der andere Gelenkpunkt 23 liegt ortsfest am Lagerschild 6. Zwei der Radiallenker 21 weisen die gleiche starre Länge auf, während der dritte Radiallenker 21a mittels einer Feder 24 längenvariabel ausgebildet ist.

Ferner sind noch drei weitere, zu den Radiallenkern 21 senkrecht ausgerichtete, axial verlaufende Lenker 25 (Axiallenker) gleichmäßig über den Umfang verteilt mit einem Gelenkpunkt 26 am Betätigungsring 14 befestigt, während der äußere Gelenkpunkt 27 ortsfest am Lagerschild 6 liegt. Durch die axiale Ausrichtung der drei gleichlangen Axiallenker 25 wird der Betätigungsring 14 genau prallel geführt, kann sich aber in axialer Richtung verlagern.

Entsprechend der Anzahl der beim Asynchronmotor vorhandenen Bürsten sind schließlich noch Bürstenbetätigungslenker 28 mit einem Gelenkpunkt 29 am Betätigungsring 14 befestigt. Der andere Gelenkpunkt 30 des Bürstenbetätigungslenkers 28 liegt jeweils an einem Hebel 31, der auf dem ortsfest gelagerten Bürstenbolzen 32 festgeklemmt ist. Der Bürstenbetätigungslenker 28 kann somit einer Bewegung des Betätigungsringes 14 durch Auslenkung seines Gelenkpunktes 30 folgen, wobei über den Hebel 31 der Bürstenbolzen 32 gedreht wird und die in einem Bürstenhalter 33 liegenden Bürsten 15 auch von der Schleifringoberfläche 34 abgehoben werden können.

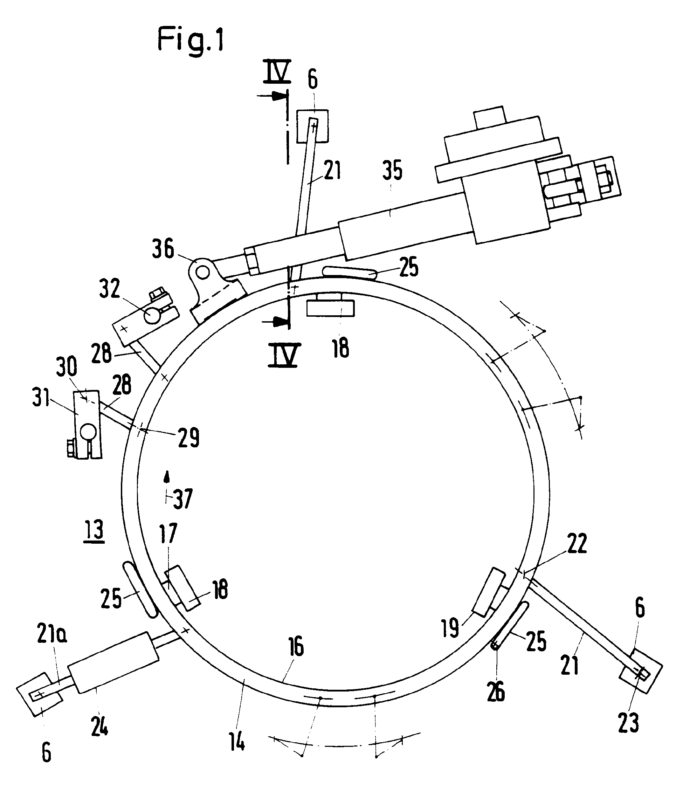

Die Gelenkpunkte 22, 23, 26, 27 und 29, 30 sind in den Figuren 1 und 2 jeweils nur schematisch angedeutet. Damit die Kurzschluß- und Bürstenabhebevorrichtung möglich reibungsarm ausgebildet und verschleißfrei ist, enthalten alle Gelenkpunkte 22, 23, 26, 27, 29, 30 jeweils Kugelgelenkköpfe. Die Lenker 21, 25, 28 sind jeweils in ihrer Länge einstellbar ausgebildet, damit eine genaue Justierung ihrer jeweils gleichen Längen bei der Montage vorgenommen werden kann.

Um die Kurzschluß- und Bürstenabhebevorrichtung 13 über den Betätigungsring 14 aus der Anfahr- und die Betriebsstellung und zurück drehen zu können, ist ein Hubspindelantrieb 35 vorgesehen, über den motorisch oder durch Handantrieb eine Kraft tangential über das Auge 36 in den Betätigungsring 14 eingeleitet wird. In den Endstellungen ist der Betätigungsring 14 jeweils durch die Selbsthemmung des Hubspindelantriebs 35 festgehalten.

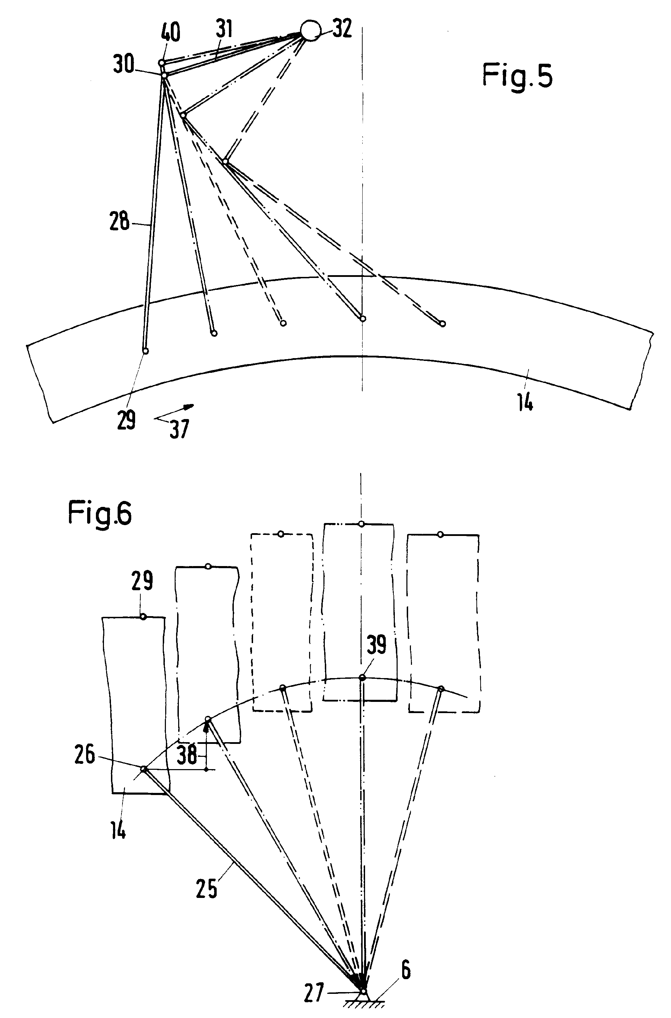

Die Wirkungsweise der Kurzschluß- und Bürstenabhebevorrichtung wird im folgendem anhand der Prinzipdarstellung in den Figuren 5 und 6 noch genauer erläutert. Dabei ist zu beachten, daß die in Figur 5 dargestellten Bürstenbetätigungslenker 28 senkrecht zu den in Figur 6 dargestellten Axiallenkern 25 stehen. Demzufolge sind in Figur 6 verschiedene axiale Ansichten des Betätigungsringes 14 gezeigt, die unterschiedliche Lagen aufweisen und verschieden dargestellt sind, während die senkrecht dazu stehende Ansicht des Betätigungsringes 14 in Fig. 5 in Bezug auf die axiale Lage des Gelenkpunktes 29 unverändert bleibt und deshalb nur ausgezogen dargestellt ist.

Bei Stillstand des Asynchronmotors befindet sich die Kurzschluß- und Bürstenabhebevorrichtung 13 in ihrer Anfahrstellung, in der die Axiallenker 25 und die Bürstenbetätigungslenker 28 sowie der Betätigungsring 14 eine bestimmte, in den Prinzipdarstellungen die Figuren 5 und 6 ausgezogen dargestellte Lage einnehmen. In dieser Lage liegen die Mantelflächen 19 der Rollen 18 des Betätigungsringes 14 an der Stirnfläche 9 des Kurzschlußringes 10 an. Die Kurzschlußkontakte 7 der Bolzen 4 der Schleifringe 3 und die Kurzschlußkontakte 8 am Kurzschlußring 10 weisen zueinander den Abstand 20 auf. Die Schleifringe 3 sind also nicht kurzgeschlossen. Vielmehr liegen die Bürsten 15 in dieser Stellung der Bürstenbetätigungslenker 28 auf der Schleifringoberfläche 34 auf, so daß der Asynchronmotor über Widerstände hochgefahren werden kann.

Beim Hochfahren des Asynchronmotors beginnt die Lauferwelle 1 zu rotieren, zusammen mit den Schleifringen 3 und dem Kurzschlußring 10. Dieser nimmt außerdem die Rollen 18 der Kurzschluß- und Bürstenabhebevorrichtung 13 mit, so daß zwischen den Rollen 18 und dem Kurzschlußring 10 keine Relativbewegung auftritt. Dies hat den Vorteil, daß die Rollen 18 allmählich und nicht schlagartig beschleunigt werden.

Nach dem Erreichen der Nenndrehzahl des Asynchronmotors wird zum Übergang auf den Nennbetrieb wird der Betätigungsring 14 über den Hubspindelantrieb 35 in Kurzschließrichtung 37 gedreht, wie dies in Figur 5 durch den Pfeil angedeutet ist.

Infolge dieser Drehung des Betätigungsringes 14 verlagert sich jeder Axiallenker 25 zunächst von der in Figur 6 ausgezogen dargestellten Lage in die strichpunktierte Lage. Dies bedingt eine verhältnismäßig große, durch einen Pfeil markierte axiale Verlagerung 38 des Betätigungsringes 14, da die Lage der beweglichen Gelenkpunkte 26 und der ortsfesten Gelenkpunkte 27 so gewählt ist, daß sich der Axiallenker 25 bei dieser Bewegung noch weit entfernt vom Scheitelpunkt 39 der Auslenkbewegung des Gelenkpunktes 26 befindet.

Es sei vorausgesetzt, daß durch diese axiale Verlagerung 38 des Kurzschlußringes 10 der Abstand 20 zwischen den Kurzschlußkontakten 7 der Schleifringe 3 und den Kurzschlußkontakten 8 des Kurzschlußringes 10 überbrückt wird. Die Kurzschlußkontakte 7 und 8 gelangen dadurch aneinander zur Anlage, wobei die Federn 12 den Kontaktdruck herstellen. Die Schleifringe 3 und somit die Läuferwicklung werden also kurzgeschlossen.

Bei dem senkrecht zum Axiallenker 25 stehenden Bürstenbetätigungslenker 28 wird dagegen bei diesem Übergang von der ausgezogen dargestellten Lage in die strichpunktiert dargestellte Lage (Figur 5) nur eine sehr geringe Auslenkung des beweglichen Gelenkpunktes 30 hervorrufen, da dieser dabei den Scheitelpunkt 40 seiner Verlagerung erreicht. Bei dieser geringen Bewegung zum Scheitelpunkt 40 wird der Hebel 31 und somit der Bürstenbolzen 32 praktisch kaum gedreht, die Bürsten 15 liegen nach wie vor auf der Schleifringoberfläche 34 auf.

Nach einer weiteren Drehung des Betätigungsringes 14 in Kurzschließrichtung 37 um den gleichen Betrag wird nun die gestrichelt dargestellte Lage erreicht. Während dieser Drehung hat sich der Gelenkpunkt 30 des Bürstenbetätigungslenkers 28 vom Scheitelpunkt 40 wieder entfernt und ist praktisch in die Lage der Anfahrstellung zurückgekehrt. Die Bürsten 15 liegen unverändert auf der Schleifringoberfläche 34 auf. Da sich durch die Drehung des Axiallenker 25 aber weiterhin eine, wenn auch kleinere axiale Verlagerung des Betätigungsringes 14 ergeben hat, bewegen sich die Rollen 18 entsprechend. Da aber der Kurzschlußring 10 federbelastet an den Kurzschlußkontakten 7 anliegt, entfernen sich die Mantelflächen 19 von der Stirnfläche 9 des Kurzschlußringes 10. Die Rollen 18 heben also vom Kurzschlußring ab. Ihre Rotation läuft jetzt allmählich aus.

Bei der weiterhin fortgeführten Drehung des Betätigungsringes 14 in Kurzschließrichtung 37 von der gestrichelt dargestellten Lage in die punkt-punkt-gestrichelt dargestellte Lage wird von dem beweglichen Gelenkpunkt 26 des Axiallenkers 25 der Scheitelpunkt 39 erreicht, wobei sich der Betätigungsring 14 nur noch sehr wenig in axialer Richtung verlagert. Beim Bürstenbetätigungslenker 28 bewirkt dagegen dieser Übergang von der gestrichelt dargestellten in die punkt-punkt-gestrichelt dargestellte Lage eine wesentlich größere Drehung des Hebels 31 und entsprechend des Bürstenbolzens 32 und das Abheben der Bürsten 15 von der Schleifringoberfläche 34 beginnt.

Damit die Bürsten 15 für den Nennbetrieb auch in bereits abgenutzten Zustand einen genügend großen Abstand von der Schleifringoberfläche 34 aufweisen, wird der Betätigungsring 14 noch einmal um den gleichen Betrag in Kurzschließrichtung 37 weitergedreht. Dabei verlagert sich der Bürstenbetätigungslenker 28 in die langgestrichelt dargestellte Lage, was nochmals eine verhältnismäßig große Drehung des Hebels 31 und des Bürstenbolzens 32 bewirkt, so daß die Endlage der Bürsten für den kurzgeschlossenen Betrieb des Asynchronmotors erreicht wird. Bei dem normalen Betrieb des Asynchronmotors mit kurzgeschlossener Läuferwicklung tritt daher keine Bürstenabnutzung auf.

Bei dieser letzten Bewegung laufen zwar infolge der Drehung des Axiallenkers 25 über den Scheitelpunkt 39 hinaus die Rollen 18 am Betätigungsring 14 etwas in axialer Richtung zurück, sie weisen aber nach wie vor einen Abstand zur Stirnfläche 9 des Kurzschlußringes 10 auf, so daß die Rollen 18 bei dem Nennbetrieb stillstehen.

## Patentansprüche

1. Kurzschluß- und Bürstenabhebevorrichtung (13) für Asynchronmotoren mit Schleifringläufer, bei denen die Schleifringe (3) axial ungefederte Kurzschlußkontakte (7) aufweisen, über die sie mittels eines in axialer Richtung verschiebbaren Kurzschlußringes (10) kurzschließbar sind,
die Mittel zur Auslösung der axialen Verschiebung des Kurzschlußringes (10) und einen die Läuferwelle (1) umgebenden, drehbar gelagerten Betätigungsring (14) enthält, der zwischen einer Anfahrstellung und einer Betriebsstellung verdrehbar ist und an dem gleichlange Lenker (Bürstenbetätigungslenker (28)) mit einem Gelenkpunkt (29) befestigt sind, die über Hebel (31) eine Drehung der Bürstenbolzen (32) und ein Abheben der Bürsten (15) erst bewirkten, wenn die Schleifringe (3) kurzgeschlossen sind,
**dadurch gekennzeichnet**, daß der Betätigungsring (14) über drei gleichmäßig über den Umfang verteilten, einseitig ortsfest gelagerten, gleichlangen und axial ausgerichteten Lenkern (25) (Axiallenkern) parallel geführt ist und auf seiner Innenfläche (16) auf drei gleichmäßig über den Umfang verteilten radialen Achsen (17) jeweils eine Rolle (18) trägt, deren Mantelfläche (19) in der Anfahrstellung an der den Schleifringen (3) zugewandten Stirnfläche (9) des Kurzschlußringes (10) anliegt, der in Richtung auf die Rollen (18) bzw. auf die Kurzschlußkontakte (7) federbelastet ist,
daß die Bürstenbetätigungslenker (28) senkrecht zu den Axiallenkern (25) ausgerichtet sind,
daß die jeweiligen Befestigungspunkte (26, 27, 29, 30) der Axiallenker und Bürstenbetätigungslenker (25, 28) so gewählt sind, daß infolge der bei der Kurzschließ-Drehbewegung des Betätigungsringes (14) auftretenden Auslenkung die nicht ortsfesten Befestigungspunkte (30, 26) zeitlich versetzt Scheitelpunkte (38, 39) durchlaufen, wobei zunächst die Befestigungspunkte (30) der Bürstenbetätigungslenker (28) ihren Scheitelpunkt (39) und danach die Befestigungspunkte (26) der Axiallenker (25) ihren Scheitelpunkt (38) durchlaufen und daß der Abstand (20) zwischen den Kurzschlußkontakten (7) und der Stirnfläche (9) des Kurzschlußringes (10) in der Anfahrstellung kleiner ist als die axiale Bewegung des Betätigungsringes (14) zwischen der Anfahr- und der Betriebsstellung.

2. Kurzschluß- und Bürstenvorrichtung nach Anspruch 1, **dadurch gekennzeichnet**, daß der Betätigungsring (14) in drei gleichmäßig über den Umfang verteilten, einseitig ortsfest gelagerten, radial ausgerichteten Lenkern (21) (Radiallenker) gelagert ist.

3. Kurzschluß- und Bürstenvorrichtung nach Anspruch 2, **dadurch gekennzeichnet**, daß zwei der Radiallenker (21) die gleiche starre Länge aufweisen und der dritte Radiallenker (21a) längenvariabel ausgebildet ist.

4. Kurzschluß- und Bürstenvorrichtung nach Anspruch 3, **dadurch gekennzeichnet**, daß der dritte Radiallenker (21a) eine Feder (24) enthält.

5. Kurzschluß- und Bürstenvorrichtung nach einem der Ansprüche 1 bis 4, **dadurch gekennzeichnet**, daß die Befestigungspunkte (22, 23, 26, 27, 29, 30) der Lenker (21, 25, 28) als Gelenkpunkte mit Kugelgelenkköpfen ausgebildet sind.

6. Kurzschluß- und Bürstenvorrichtung nach einem der Ansprüche 1 bis 5, **dadurch gekennzeichnet**, daß die Drehung des Befestigungsringes (14) durch eine tangential eingeleitete Kraft ausgelöst ist.

7. Kurzschluß- und Bürstenvorrichtung nach Anspruch 6, **dadurch gekennzeichnet**, daß der Betätigungsring (14) über einen Hubspindelantrieb (35) betätigt ist.

8. Kurzschluß- und Bürstenabhebevorrichtung nach einem der Ansprüche 1 bis 7,
**dadurch gekennzeichnet**, daß der Kurzschlußring (10) auf Gleitbolzen gelagert ist, die mit der Läuferwelle (1) verbunden sind.

## Claims

1. Short-circuiting and brush-lifting device (13) for asynchronous motors with slipring rotors in which the sliprings (3) are provided with axially unsprung short circuit contacts (7) through which they may be short circuited by means of a short-circuiting ring (10) which may be shifted in the axial direction, comprising means to initiate the axial displacement of the short-circuiting ring (10) and, enclosing the rotor shaft (1), a rotatably mounted actuating ring (14) which can be rotated between a starting position and a normal service position and to which linkages of equal lengths (brush actuating linkages (28)) are fastened by a pivot point (29), and which will only effect rotation of the brush terminal studs (32) and lifting of the brushes (15) by means of levers (31) once the sliprings (3) have been short-circuited, characterized in that the actuating ring (14) is guided in parallel by three linkages (25) (axial linkages) distributed evenly around its circumference, with fixed location on one side, being of equal length and axially directed, and having mounted on its internal face (16), on three radial spindles (17) distributed equally around its circumference, rollers (18), the cylindrical surfaces (19) of which are disposed against the end face (9) of the short-circuiting ring (10) facing the sliprings (3) in the starting position, the short-circuiting ring (10) being spring-loaded in the direction towards the rollers (18) or towards the short-circuit contacts (7), in that the brush actuating linkages (28) are aligned perpendicular to the axial linkages (25), in that the associated fastening points (26, 27, 29, 30) of the axial linkages and brush actuating linkages (25, 28) are selected such that as a consequence of the deflection occurring in the short-circuiting rotational movement of the actuating ring (14), the non-static fastening points (30, 26) pass through non-coterminous crown points (38, 39), with the fastening points (30) of the brush actuating linkages (28) passing their crown point (39) first and the fastening points (26) of the axial linkages (25) then passing through their crown point (38) and in that the distance (20) between the short-circuit contacts (7) and the end face (9) of the short-circuiting ring (10) in the starting position being smaller than the axial movement of the actuating ring (14) between the starting position and the normal service position.

2. Short-circuiting and brush-lifting device in accordance with claim 1, characterized in that the actuating ring (14) is mounted in three radially directed linkages (21) (radial linkages) distributed uniformly around the circumference and fixed on one side.

3. Short-circuiting and brush-lifting device in accordance with claim 2, characterized in that two of the radial linkages (21) have the same rigid length and the third radial linkage (21a) is designed to be of variable length.

4. Short-circuiting and brush-lifting device in accordance with claim 3, characterized in that the third radial linkage (21a) includes a spring (24).

5. Short-circuiting and brush-lifting device in accordance with one of the claims 1 to 4, characterized in that the fastening points (22, 23, 26, 27, 29, 30) of the linkages (21, 25, 28) have the form of pivot points with ball pivot heads.

6. Short-circuiting and brush-lifting device in accordance with one of the claims 1 to 5, characterized in that the rotation of the actuating ring (14) is initiated by a load applied tangentially.

7. Short-circuiting and brush-lifting device in accordance with claim 6, characterized in that the actuating ring (14) is actuated by means of an elevating screw drive (35).

8. Short-circuiting and brush-lifting device in accordance with one of the claims 1 to 7, characterized in that the short-circuiting ring (10) is mounted on sliding bolts connected to the rotor shaft (1).

## Revendications

1. Dispositif de court-circuitage et d'écartement des balais pour des moteurs asynchrones possédant un rotor à bagues collectrices, dans lequel les bagues collectrices (3) possèdent des contacts de court-circuit (7) non suspendus axialement par des ressorts et au moyen desquels elles peuvent être court-circuitées à l'aide d'une bague de court-circuit (10) pouvant être déplacée dans la direction axiale,
ce dispositif comportant des moyens pour déclencher le déplacement axial de la bague de court-circuit (10) et une bague d'actionnement (14) montée de manière à pouvoir tourner et qui entoure l'arbre (1) du rotor et peut tourner entre une position de départ et une position de service et à laquelle sont fixés, au niveau d'un point d'articulation (29), des bras articulés de même longueur (bras articulés (28) d'actionnement des balais), qui provoquent, par l'intermédiaire de leviers (31), une rotation des tiges (32) des balais et un écartement des balais (15) uniquement lorsque les bagues collectrices (3) sont court-circuitées,
caractérisé par le fait
que la bague d'actionnement (14) est à guidage parallèle par l'intermédiaire de trois bras articulés (25), qui sont répartis uniformément sur la périphérie, sont montés fixes d'un côté, ont la même longueur et sont dirigés axialement (bras articulés axiaux) et porte, sur sa surface intérieure (16), et ce sur trois axes radiaux (17) répartis uniformément autour de la périphérie, respectivement un galet (18), dont la surface enveloppe (19) s'applique, dans la position de départ, contre la surface frontale (9), tournée vers les bagues collectrices (3), de la bague de court-circuit (10) qui est chargée par un ressort en direction des galets (18) ou des contacts de court-circuit (7),
que les bras articulés (28) d'actionnement des balais sont perpendiculaires aux bras articulés axiaux (25),
que les points de fixation respectifs (26,27,29,30) des bras articulés axiaux et des bras articulés (25,28) d'actionnement des balais sont choisis de telle sorte qu'en raison de la déviation qui apparaît lors du mouvement de rotation de court-circuitage de la bague d'actionnement (14), les points de fixation (30,26), qui ne sont pas fixes, passent, lors de leur décalage latéral, par des points sommitaux (38,39), auquel cas tout d'abord les points de fixation (30) des bras articulés (28) d'actionnement des balais passent par leur point sommital (39) et ensuite les points de fusion (26) des bras articulés axiaux (25) franchissent leur point sommital (38), et
que la distance (20) entre les contacts de courtcircuit (16) et la surface frontale (9) de la bague de court-circuit (10) dans la position de départ est inférieure à la course de déplacement axial de la bague d'actionnement (14) entre la position de départ et la position de service.

2. Dispositif de court-circuitage et d'écartement des balais suivant la revendication 1, caractérisé par le fait que la bague d'actionnement (14) est montée dans trois bras articulés orientés radialement (21) (bras articulés radiaux), répartis uniformément sur la périphérie et montés fixes d'un côté.

3. Dispositif de court-circuitage et d'écartement des balais suivant la revendication 2, caractérisé par le fait que deux des bras articulés radiaux (21) possèdent la même longueur à l'état rigide et que le troisième bras articulé radial (21 a) est agencé de manière à avoir une longueur variable.

4. Dispositif de court-circuitage et d'écartement des balais suivant la revendication 3, caractérisé par le fait que le troisième bras articulé radial (21a) comporte un ressort (24).

5. Dispositif de court-circuitage et d'écartement des balais suivant l'une des revendications 1 à 4, caractérisé par le fait que les points de fixation (22,23,26,27,29,30) des bras articulés (21,25,28) sont réalisés sous la forme de points d'articulation comportant des têtes d'articulation sphériques.

6. Dispositif de court-circuitage et d'écartement des balais suivant l'une des revendications 1 à 5, caractérisé par le fait que la rotation de la bague de fixation (14) est déclenchée par une force appliquée tangentiellement.

7. Dispositif de court-circuitage et d'écartement des balais suivant la revendication 6, caractérisé par le fait que la bague d'actionnement (14) est actionnée par l'intermédiaire d'un dispositif d'entraînement à broche de levage (35).

8. Dispositif de court-circuitage et d'écartement des balais suivant l'une des revendications 1 à 7, caractérisé par le fait que la bague de court-circuit (10) est montée sur des axes de glissement, qui sont reliés à l'arbre (1) du rotor.
